# FASCICULE DE BREVET EUROPEEN

(11) **EP 3 077 228 B1**
(45) Date de publication et mention de la délivrance du brevet: **10.01.2018**
(21) Numéro de dépôt: 14814944.6
(22) Date de dépôt: 24.11.2014
(51) Int. Cl.: B60G 17/0165, B60Q 9/00, B60T 11/16, B60W 40/06, B60K 28/10, B60T 7/22, B60W 20/00, B60W 30/09, B60W 30/18

(54) **VÉHICULE AVEC DISPOSITIF DE PRÉVENTION CONTRE LES CHOCS D'UN ORGANE SOUS CAISSE, ET PROCÉDÉ DE PRÉVENTION CORRESPONDANT**
FAHRZEUG MIT EINER VORRICHTUNG ZUR VERHINDERUNG VON STÖSSEN VON EINEM UNTERBODENELEMENT UND ZUGEHÖRIGES PRÄVENTIONSVERFAHREN
VEHICLE HAVING A DEVICE FOR PREVENTING SHOCKS FROM AN UNDERBODY MEMBER, AND CORRESPONDING PREVENTION METHOD

(30) Priorité: 03.12.2013 FR 1361990
(43) Date de publication de la demande: 12.10.2016
(73) Titulaire: Renault s.a.s., 92100 Boulogne-Billancourt (FR)
(72) Inventeur: DEBERT, Maxime, F-78000 Versailles (FR); KETFI-CHERIF, Ahmed, F-78990 Elancourt (FR); VAN-FRANK, Jean, F-92500 Rueil Malmaison (FR)
(86) Numéro de dépôt international: PCT/FR2014/053007
(87) Numéro de publication internationale: WO 2015/082796

(56) Documents cités:
- WO-A1-2012/123554
- DE-A1-102009 001 183
- JP-A- 2007 284 017
- US-A1- 2009 157 257
- US-A1- 2013 093 583

## Description

L'invention a pour objet les véhicules munis d'organes sensibles sous la caisse du véhicule, et notamment à proximité des roues arrière du véhicule. C'est le cas par exemple de certains véhicules équipés de moteurs électriques placés à proximité des roues arrière du véhicule.

Pour rendre ce type de véhicules résistants aux chocs arrière, il faudrait en général renforcer donc alourdir à la fois le train arrière et l'équipement en question. Une autre stratégie peut être d'annuler le risque de choc arrière sur un obstacle pouvant détériorer l'organe sensible.

La demande de brevet CN 102 167 004 propose par exemple d'équiper un train arrière de véhicule d'un capteur de choc et d'interdire le redémarrage du véhicule en cas de choc important. Cette stratégie n'évite pas l'endommagement du véhicule mais protège les passagers du véhicule.

Dans la demande de brevet CN102275587 le véhicule est muni d'un accéléromètre. Un dispositif avertit l'utilisateur, sans exercer d'action sur les organes moteurs du véhicule.

La demande de brevet CN102225692 décrit une stratégie de pré-choc agissant sur les freins du véhicule.

La demande de brevet WO201145518 décrit un bouclier arrière intégrant le système de refroidissement des machines électriques. Cette invention ne protège pas les machines électriques proches de la roue.

La demande de brevet JP2009261187 décrit un système de protection du réseau haute tension du véhicule en cas de détection de choc. Le document DE102009001183 A1 est considéré comme l'art antérieur le plus proche selon le préambule de la revendication 1. L'invention a pour but de proposer une stratégie de prévention qui permette à la fois de protéger du choc l'arrière du véhicule, et de protéger les organes présents sous la caisse en partie arrière du véhicule. Cette stratégie devra être préventive afin d'éliminer les risques de choc contre les organes présents sous la caisse. De cette manière, on peut éviter d'alourdir le véhicule en surdimensionnant les organes concernés ou en les protégeant par des systèmes de boucliers, qui de toute façon peuvent se révéler insuffisants en cas de choc.

A cette fin, l'invention propose d'équiper un véhicule avec un dispositif de prévention contre les chocs d'un organe sous caisse de véhicule automobile selon les caractéristiques de la revendication 1. Selon une variante de réalisation, le dispositif comprend au moins un capteur de distance à l'arrière du véhicule, et comprend une unité de commande électronique configurée pour, quand la distance mesurée par le capteur de distance devient inférieure à un seuil de distance et que le véhicule est en marche arrière, appliquer un coefficient multiplicateur inférieur à 1 à une consigne de couple émise par une pédale d'accélération. On considère que le véhicule est en marche arrière si la consigne de couple commandée par la pédale d'accélération du véhicule tend à faire déplacer le véhicule vers l'arrière. Typiquement, si le véhicule comprend un moteur thermique, la boîte de vitesse associée au moteur thermique peut alors être en configuration de marche arrière. Pour un véhicule mû uniquement par un ou plusieurs moteurs électriques, le véhicule est considéré en marche arrière si le couple développé par le moteur électrique est un couple moteur et tend à déplacer le véhicule vers l'arrière. Par pédale d'accélération on entend un dispositif de commande permettant au conducteur du véhicule, par une action physique du conducteur, de moduler une consigne de couple aux roues du véhicule. La pédale peut donc comprendre un dispositif au volant comme une manette, voire un dispositif tactile.

Selon un mode de réalisation préféré, pour les distances inférieures au seuil, le coefficient multiplicateur est décroissant par rapport à la valeur absolue de la vitesse de recul du véhicule et est croissant par rapport à la distance mesurée par le capteur de distance. De manière préférentielle, le coefficient multiplicateur tend vers zéro quand une distance estimée entre l'arrière du véhicule et un obstacle arrière détecté par le capteur de distance tend vers zéro. Selon une variante de réalisation, on peut adapter l'intensité et le signe du couple d'un ou plusieurs moteurs pour obtenir aux roues un couple moteur total, dû aux moteurs et éventuellement au poids du véhicule, qui est le résultat de l'application du coefficient multiplicateur à la consigne de couple issue de la pédale d'accélération du véhicule.

Selon un autre mode de réalisation qui peut se combiner au précédent, le dispositif comprend au moins un détecteur apte à détecter la présence d'un objet étranger sous la caisse du véhicule, l'unité de commande électronique étant configurée pour, quand un élément étranger est détecté sous le véhicule et que la vitesse engagée sur le véhicule est la marche arrière, appliquer, indépendamment de la position de la pédale d'accélération, un couple de freinage pour immobiliser le véhicule, puis pour appliquer un couple de maintien pour maintenir le véhicule immobile. De manière préférentielle, le couple de maintien est maintenu jusqu'à ce qu'une vitesse de marche avant du véhicule soit engagée, ou jusqu'à ce que l'objet étranger ne soit plus détecté. Selon les variantes de réalisation, le dispositif peut comprendre un détecteur de présence et ne pas comprendre de capteur de distance, ou comprendre un capteur de distance et ne pas comprendre de détecteur de présence.

L'invention propose également un véhicule à motorisation électrique ou à motorisation hybride, équipé d'un dispositif de prévention tel que décrit précédemment, dans lequel, lors de la détection d'un objet étranger sous la caisse du véhicule l'unité de commande électronique est configurée pour commander un ou plusieurs moteurs électriques pour appliquer le couple de freinage puis de maintien du véhicule, et pour débrayer, s'il y en a un, le moteur thermique du véhicule.

Selon encore un autre aspect, l'invention propose un véhicule à motorisation hybride équipé d'un dispositif de prévention tel que décrit précédemment. L'unité de commande électronique est configurée pour appliquer, quand la distance mesurée par le capteur de distance devient inférieure au seuil de distance, le même coefficient multiplicateur au couple requis d'un moteur thermique et au couple requis d'un ou de plusieurs moteurs électriques du véhicule.

Avantageusement, l'unité de commande électronique peut être en outre configurée pour appliquer un couple de maintien sur place du véhicule si une vitesse de marche avant ou de marche arrière est engagée sur le véhicule, et si l'une des conditions suivantes est vérifiée : soit aucun appui n'est exercé sur la pédale, soit pour le niveau d'appui exercé sur la pédale, la direction effective de déplacement du véhicule tend à être dans le sens contraire de la vitesse engagée. Avantageusement, le couple de maintien peut être appliqué par un ou plusieurs moteurs électriques.

Selon un mode de réalisation avantageux, l'unité de commande électronique est configurée pour vérifier si le ou les moteurs électriques sont en mesure d'appliquer le couple de freinage puis le couple de maintien du véhicule, et si ce n'est pas le cas, pour actionner lors de la détection d'un objet étranger sous la caisse du véhicule, un autre système de freinage du véhicule. Le système de freinage peut être un freinage dissipatif. Certains circuits de commande de freinage peuvent être communs à des systèmes de contrôle de type ABS ou ESP si le véhicule est équipé de tels systèmes.

L'invention propose également un procédé de prévention contre les chocs d'un organe sous caisse de véhicule automobile selon les caractéristiques de la revendication 8, dans lequel on vérifie, d'une part, si l'arrière du véhicule ne se trouve pas à une distance inférieure à un seuil de distance d'un obstacle arrière, et on vérifie, d'autre part qu'un objet étranger ne s'est pas déjà introduit par l'arrière sous la caisse du véhicule.

De manière préférentielle, dans ce procédé, si un objet étranger est présent sous la caisse du véhicule, on immobilise le véhicule jusqu'à ce que les commandes du conducteur tendent à faire avancer le véhicule pour le dégager de l'objet étranger.

En absence d'objet étranger sous la caisse, en deçà du seuil de distance, si la vitesse engagée sur le véhicule est la marche arrière, on applique un coefficient multiplicateur inférieur à 1 à une consigne de couple émise par une pédale d'accélération du véhicule, le coefficient multiplicateur étant décroissant par rapport à la valeur absolue de la vitesse et étant croissant par rapport à la distance, pour les distances inférieures au seuil.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1a est une représentation schématique d'un véhicule équipé d'un système de prévention selon l'invention,
- la figure 1b est une représentation schématique du véhicule de la figure 1a, en vue de dessous,
- la figure 2 est un schéma simplifié d'un mode de fonctionnement d'un système de prévention selon l'invention.

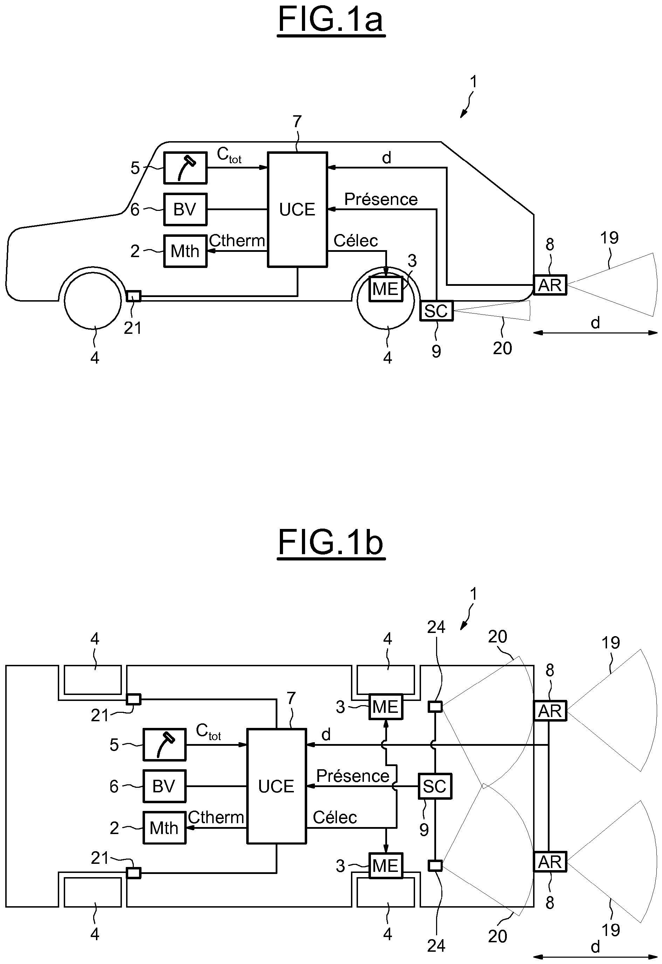

Tel qu'illustré sur les figures 1a et 1b, un véhicule 1 à propulsion hybride selon l'invention comprend un moteur thermique 2, un ou plusieurs moteurs électriques 3 positionnés sous le capot arrière du véhicule à proximité des roues arrière 4 du véhicule, un poste de pilotage du véhicule comprenant une pédale d'accélération 5, et une boîte de commande de vitesses 6. Le véhicule 1 comprend une unité de commande électronique 7 apte notamment à imposer un couple moteur au moteur thermique 2 et apte à imposer un couple moteur ou résistif au moteur électrique 3.

L'unité de commande électronique 7 reçoit un signal "Cₜₒₜ" de la pédale d'accélération 5, qu'elle traduit en couple de consigne souhaité par le conducteur du véhicule au niveau des roues du véhicule. Le couple au niveau des roues peut être obtenu en développant simultanément un couple "Ctherm" au moyen du moteur thermique 2, et un couple "Célec" au moyen d'un ou plusieurs moteurs électriques 3. "Ctherm" et "Célec" désignent ici respectivement une consigne de couple envoyée par l'UCE 7 au moteur thermique 2, et une consigne de couple envoyée par l'UCE 7 au(x) moteur(s) électrique(s) 3. L'unité de commande électronique 7 est apte à estimer la vitesse linéaire d'avancement ou de recul du véhicule, par exemple à l'aide des données transmise par un ou plusieurs capteurs 21 de vitesse de roues du véhicule.

L'unité de commande électronique reçoit également un signal d'une boîte de commande de vitesses 6 permettant notamment de savoir si le conducteur souhaite faire avancer ou faire reculer le véhicule. L'unité de commande électronique 7 reçoit un signal d'un capteur de vitesse de rotation d'une ou de plusieurs roues lui permettant de calculer une vitesse d'avancement V du véhicule qui est positive si le véhicule avance, et qui est négative si le véhicule recule.

Le véhicule 1 est en outre équipé d'un système 8 capteur de distance arrière apte à estimer une distance d séparant une partie du capot arrière du véhicule, et un obstacle qui se trouverait sensiblement à la même hauteur que le détecteur 8. Selon une variante de réalisation, le capteur de distance 8 peut être apte à estimer une distance minimale du capot du véhicule par rapport à divers obstacles qui ne seraient pas situés directement dans le prolongement arrière du capteur de distance 8 mais qui seraient situés dans un cône de détection du capteur de distance 8. Par distance minimale, on entend ici la plus courte distance d'un des obstacles au capot du véhicule.

Le véhicule 1 est également équipé d'un système 9 de détecteur(s) sous caisse, par exemple d'un détecteur 9 muni de deux capteurs 24 sous caisse placés chacun à proximité d'un moteur électrique 3 associé à une des roues arrière 4 du véhicule. Le détecteur sous caisse 9 est configuré pour détecter la présence d'un objet étranger sous la caisse du véhicule 1, dans un espace délimité par un ou plusieurs faisceaux de détection 20 émis chacun par exemple vers l'arrière du véhicule de manière à balayer chacun, lorsque le véhicule recule, une bande de largeur s'étendant de droite et de gauche d'un organe à protéger des chocs, par exemple de droite et de gauche d'un moteur électrique 3 situé à proximité d'une roue du véhicule. L'espace analysé par chacun des faisceaux de détection 20 peut se trouver en arrière des organes à protéger par rapport à un sens préférentiel de déplacement du véhicule.

Le dispositif de prévention selon l'invention vise à la fois à minimiser les endommagements par choc arrière au niveau du capot du véhicule et, dans le cas où un obstacle viendrait malgré tout à pénétrer sous le capot du véhicule, vise à protéger les organes sensibles tels que les moteurs électriques 3.

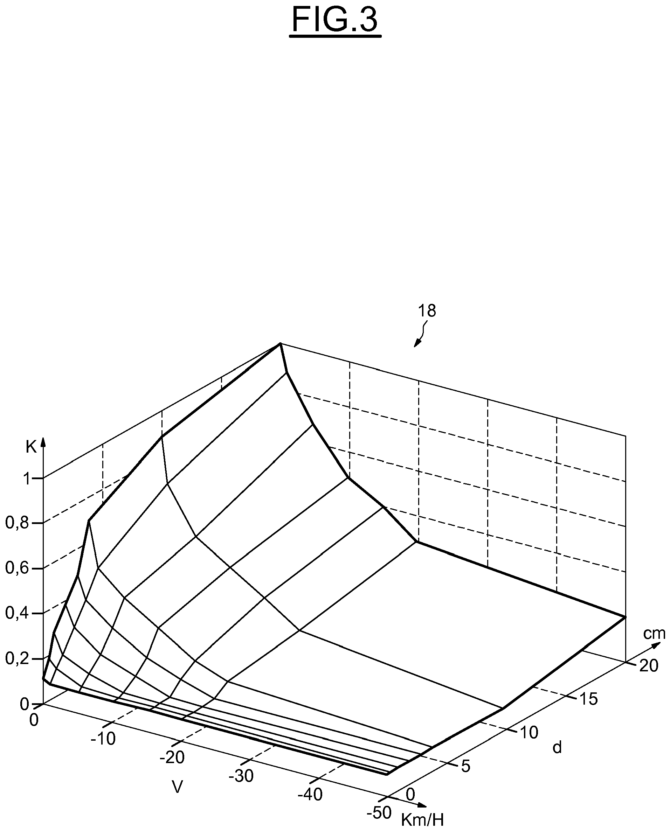

Afin de permettre des manoeuvres telles que des manoeuvres de parking, le conducteur est autorisé à reculer le véhicule tant qu'il le souhaite, même face à un obstacle, mais on limite le couple autorisé au niveau des roues motrices, en fonction de la proximité de l'obstacle et de la vitesse constatée du véhicule. La figure 3 illustre ainsi une cartographie 18 d'un coefficient multiplicateur que l'on peut appliquer à la consigne émanant de la pédale d'accélération du véhicule. Le coefficient multiplicateur "K" est cartographié en fonction, d'une part, de la proximité, "d" -ici en cm- du véhicule par rapport à l'obstacle détecté en arrière du véhicule, et d'autre part, en fonction de la vitesse "V" du véhicule en direction de l'obstacle, ici en km, mesurée comme négative pour la marche arrière. Pour une vitesse inférieure à 5 km/heure et une distance supérieure à 20 cm, le coefficient multiplicateur reste proche de 1. Ce coefficient multiplicateur diminue fortement quand la distance d entre le véhicule et l'obstacle se rapproche de zéro.

La décroissance en fonction de la proximité est faible lorsque l'on vient de franchir le seuil d'application du coefficient multiplicateur, ici égal à 20 cm. Le coefficient multiplicateur décroît ensuite de plus en plus vite au fur et à mesure que la distance d tend vers zéro.

En ce qui concerne les variations du coefficient multiplicateur par rapport à la vitesse de recul du véhicule, le coefficient multiplicateur K décroît fortement entre les vitesses de quelques km/heure voire proches de zéro, et une vitesse de 10 km/heure. Le coefficient multiplicateur K continue de décroître, plus lentement, au-delà de 10 km/heure pour converger vers une asymptote sensiblement horizontale au-delà de 20 km/heure. L'ordonnée de l'asymptote se rapproche quant à elle de zéro quand la distance d tend vers zéro.

L'utilisation de cette cartographie 18 de coefficient multiplicateur K permet de limiter l'énergie du choc lorsque le véhicule rencontre un obstacle arrière. Elle peut permettre dans certains cas d'éviter l'intrusion d'un élément étranger sous le capot. Cependant, comme les éléments les plus bas ne sont pas toujours détectés par le capteur de distance 8, une stratégie supplémentaire permet d'arrêter presque instantanément le véhicule si le détecteur sous caisse 9 découvre un objet étranger sous la caisse du véhicule.

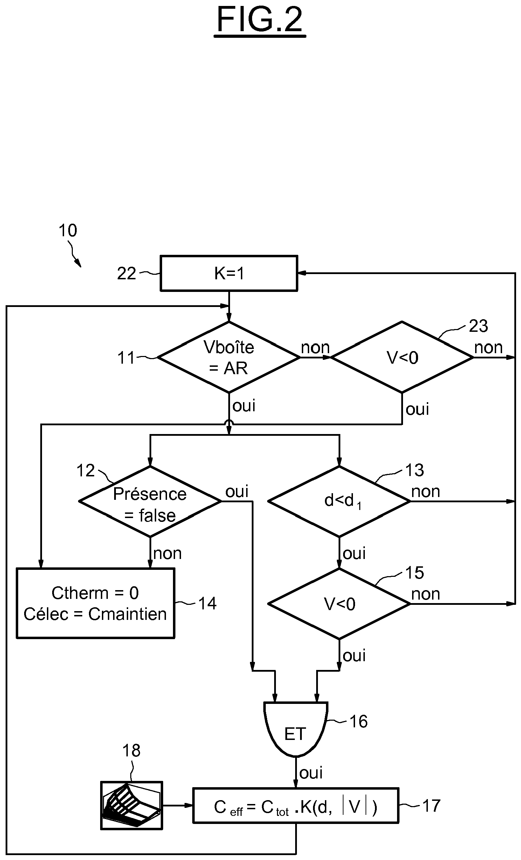

Le principe de fonctionnement est résumé de manière simplifiée sur la figure 2. On retrouve sur la figure 2 des éléments et des désignations de grandeurs présents sur la figure 1a, les mêmes éléments étant désignés par les mêmes références. Le schéma 10 de fonctionnement reprend les grandes lignes de la stratégie d'un procédé de prévention des dommages par choc arrière sur un véhicule selon l'invention, appliqué par exemple au véhicule de la figure 1a. Tel qu'illustré sur la figure 2, on initialise à une étape 22 un coefficient multiplicateur K à la valeur 1. Un test 11 vérifie ensuite si le véhicule 1 est en configuration de marche arrière. Par configuration de marche arrière, on peut entendre une marche arrière engagée sur une boîte de vitesses de type mécanique si le véhicule comprend un moteur thermique associé à une telle boîte. On peut également entendre par marche arrière engagée, une commande du conducteur demandant un mouvement vers l'arrière du véhicule, que le véhicule soit un véhicule à propulsion hybride ou un véhicule à propulsion exclusivement électrique.

Si le test 11 détectant le sens de marche souhaité du véhicule détecte une marche avant, on peut effectuer à l'étape 23 un test pour vérifier que, malgré la marche avant engagée, le véhicule n'est pas en train de reculer. Si le test 23 est positif, c'est-à-dire si le véhicule est en train de reculer, ce que l'on détecte par exemple en utilisant les capteurs 18 de vitesse de rotation de roues, alors on active une stratégie de maintien du véhicule à une étape 14.

Dans l'exemple illustré, la stratégie de maintien du véhicule est obtenue en débrayant le moteur thermique 2 et en appliquant au niveau du ou des moteurs électriques 3, un couple de maintien permettant dans un premier temps de stopper le véhicule, puis de le maintenir immobile malgré la pesanteur, ou malgré d'autres forces, qui tirent le véhicule vers l'arrière.

Le véhicule est ainsi maintenu immobile jusqu'à ce que la commande à la pédale du conducteur corresponde à un couple suffisant aux roues pour que le véhicule puisse effectivement se mouvoir à nouveau en marche avant avec un couple correspondant à la consigne à la pédale.

Si, suite au test 11, on détecte que la consigne du conducteur est une consigne de marche arrière, on effectue deux tests en parallèle : le test 12 pour savoir si aucun objet étranger ne se trouve dans le périmètre de détection des détecteurs sous caisse 9, et un test 13 pour savoir si la distance entre le capot arrière du véhicule et l'obstacle le plus proche détecté à l'arrière du véhicule est inférieure à une distance seuil d₁.

Quelle que soit la distance détectée, si le test 12 indique la présence d'un objet étranger, c'est-à-dire, dans le cas illustré, si le test 12 est négatif, alors on applique la stratégie 14 de maintien du véhicule déjà décrite précédemment.

Si aucun objet n'est détecté sous la caisse, c'est-à-dire ici si le test 12 est positif, que la distance d est inférieure au seuil d₁, et que le véhicule est effectivement en train de reculer c'est-à-dire que la vitesse V est négative, comme on le constate par un test 15 appliqué à la suite du test 13, alors, si toutes ces conditions sont réunies comme l'indique le résultat booléen d'un opérateur 16 du type « ET », on applique une limitation de couple à une étape 17. Cette limitation de couple peut par exemple consister à remplacer la valeur de consigne de couple Cₜₒₜ issue de la pédale, par une valeur effective C_{eff} obtenue en multipliant le couple Cₜₒₜ par le coefficient multiplicateur K lu dans la cartographie 18 en fonction de la distance d et de la vitesse de recul du véhicule, soit : C_{eff} = Cₜₒₜ. K(d,IVI)

Suite à cette limitation de couple, le couple total, donc le couple développé par le moteur thermique et/ou le moteur électrique est pondéré par un coefficient K qui est fonction de la distance d et de la valeur absolue de la vitesse V. On continue alors la surveillance en reprenant l'algorithme au niveau du test 11.

Une fois que la consigne de boîte redevient une consigne de marche avant, (test 11 négatif), ou que la distance d séparant l'arrière du véhicule de l'obstacle redevient supérieure au seuil d₁, par exemple parce que l'obstacle a disparu (test 13 négatif), le conducteur récupère le contrôle direct du couple commandé par la pédale au niveau des roues, et le schéma logique reprend à l'étape 22. Il peut également arriver que, pendant que le véhicule recule sous l'effet d'une commande à la pédale avec application d'un coefficient multiplicateur K, le test 12 indique la présence d'un objet sous le capot, auquel cas le véhicule est immobilisé (stratégie de maintien 14) jusqu'à ce que le conducteur décide d'opérer une manoeuvre en marche avant.

L'invention est de manière préférentielle appliquée à des véhicules à motorisation électrique ou à motorisation hybride, dont le pilotage est par défaut configuré pour éviter que le véhicule ne prenne de la vitesse sous l'effet de son propre poids. Ainsi, si la pédale du véhicule n'est pas actionnée, une stratégie de maintien similaire à celle de l'étape 14 est appliquée pour maintenir le véhicule immobile, indépendamment du signe du couple moteur à appliquer au niveau des roues. La stratégie de maintien 14 peut par exemple forcer un arrêt ou un débrayage du moteur thermique, et une application d'un couple au niveau d'un ou plusieurs moteurs électriques, ce couple des moteurs électriques étant adapté pour stopper le véhicule puis pour le maintenir à l'arrêt.

L'invention ne se limite pas aux exemples de réalisation décrits et peut se décliner en de nombreuses variantes. La cartographie 18 pourrait être fonction uniquement de la distance d, ou être fonction de la distance d et de l'accélération du véhicule en direction de l'obstacle. Le coefficient multiplicateur K pourrait prendre en compte une masse estimée du véhicule suivant que le véhicule est plus ou moins chargé, de manière, et être, à distance et vitesse d'avancement égale, plus faible quand le véhicule est plus chargé. Le dispositif de prévention contre les chocs selon l'invention peut être installé sur un véhicule à propulsion hybride thermique-électrique, ou sur un véhicule à propulsion exclusivement électrique. Selon encore une autre variante de réalisation, si des organes sensibles sont présents sous la caisse du véhicule, autres que des moteurs électriques, le dispositif selon l'invention peut être adapté à un véhicule à propulsion thermique seule, en remplaçant la stratégie de maintien de l'étape 14 par une stratégie de freinage dissipatif au moyen des freins du véhicule. De manière générale, la stratégie de prévention selon l'invention permet d'éviter des chocs sur les organes sensibles d'un véhicule situés sous la caisse du véhicule. On évite ainsi à la fois les risques d'immobilisation intempestive du véhicule suite à un endommagement des organes sous caisse, et on évite de surdimensionner les organes en question ou de les protéger par des dispositifs de protection onéreux.

## Revendications

1. Véhicule (1) équipé d'un dispositif de prévention contre les chocs d'un organe sous caisse, comprenant au moins un détecteur (9) apte à détecter la présence d'un objet étranger sous la caisse du véhicule, et une unité de commande électronique (7) configurée pour, quand un élément étranger est détecté sous le véhicule par le détecteur de présence (9), et que la vitesse engagée sur le véhicule est en marche arrière, appliquer un couple de freinage pour immobiliser le véhicule, **caractérisé par le fait que** le détecteur est configuré pour émettre un faisceau de détection (20) vers l'arrière du véhicule de manière à balayer, lorsque le véhicule recule, une bande de largeur s'étendant de droite et de gauche d'un organe à protéger des chocs, l'unité de commande électronique étant également configurée pour appliquer un couple de maintien (Cmaintien) pour maintenir le véhicule (1) immobile.

2. Véhicule selon la revendication 1, à motorisation électrique ou à motorisation hybride, dans lequel l'organe à protéger est un moteur électrique situé à proximité d'une roue du véhicule, l'unité de commande électronique est configurée pour commander un ou plusieurs moteurs électriques (3) pour appliquer le couple de freinage puis de maintien (Cmaintien) du véhicule, et pour débrayer, s'il y en a un, le moteur thermique (2) du véhicule, lors de la détection d'un objet étranger sous la caisse du véhicule.

3. Véhicule selon l'une des revendications 1 ou 2, comprenant en outre au moins un capteur de distance (8) à l'arrière du véhicule, dans lequel l'unité de commande électronique (7) est configurée pour, quand la distance (d) mesurée par le capteur de distance (8) devient inférieure à un seuil de distance (d₁) et que le véhicule est en marche arrière, appliquer à une consigne de couple émise par une pédale d'accélération (5), un coefficient multiplicateur (K) inférieur à 1.

4. Véhicule selon la revendication 3, dans lequel, pour les distances (d) inférieures au seuil (d₁), le coefficient multiplicateur (K) est décroissant par rapport à la valeur absolue de la vitesse (|V|) de recul du véhicule (1) et est croissant par rapport à la distance (d) mesurée par le capteur de distance (8).

5. Véhicule selon l'une quelconque des revendications précédentes, à motorisation hybride, dans lequel l'unité de commande électronique (7) est configurée pour appliquer, quand la distance (d) mesurée par le capteur de distance (8) devient inférieure au seuil de distance (d₁), le même coefficient multiplicateur (K) au couple (Ctherm) requis d'un moteur thermique (2) et au couple (Célec) requis d'un ou de plusieurs moteurs électriques (3) du véhicule.

6. Véhicule selon l'une quelconque des revendications précédentes, dans lequel l'unité de commande électronique (7) est en outre configurée pour appliquer un couple de maintien sur place (Cmaintien) du véhicule (1) si une vitesse de marche avant ou de marche arrière est engagée sur le véhicule, et si une des conditions suivantes est vérifiée : soit aucun appui n'est exercé sur la pédale, soit pour le niveau d'appui exercé la direction effective de déplacement du véhicule tend à être dans le sens contraire de la vitesse engagée.

7. Véhicule selon l'une quelconque des revendications précédentes, dans lequel l'unité de commande électronique (7) est configurée pour vérifier si le ou les moteurs électriques (3) sont en mesure d'appliquer un couple (Cmaintien) suffisant pour freiner puis pour maintien immobile le véhicule, et si ce n'est pas le cas, pour actionner lors de la détection d'un objet étranger sous la caisse du véhicule, un autre système de freinage du véhicule.

8. Procédé de prévention contre les chocs d'un organe sous caisse de véhicule automobile, dans lequel on vérifie qu'un objet étranger ne se trouve pas à l'intérieur d'un espace prédéfini sous la caisse du véhicule via un faisceau de détection (20) émis par un détecteur (9) vers l'arrière du véhicule de manière à balayer, lorsque le véhicule recule, une bande de largeur s'étendant de droite et de gauche d'un organe à protéger des chocs, et, si un objet étranger est présent dans cet espace, on applique un couple de freinage pour immobiliser le véhicule.

9. Procédé selon la revendication 8, dans lequel on vérifie (13) si l'arrière du véhicule ne se trouve pas à une distance (d) inférieure à un seuil de distance (d₁) d'un obstacle arrière, et en deçà du seuil de distance, si la vitesse engagée sur le véhicule est en marche arrière (23), on applique (17) un coefficient multiplicateur (K) inférieur à 1 à une consigne de couple (Cₜₒₜ) émise par une pédale d'accélération (5) du véhicule.

10. Procédé selon la revendication 9, dans lequel le coefficient multiplicateur (K) est décroissant par rapport à la valeur absolue de la vitesse et est croissant par rapport à la distance, pour les distances inférieures au seuil.

## Patentansprüche

1. Fahrzeug (1), ausgestattet mit einer Aufprallverhütungsvorrichtung eines Unterbodenorgans, das mindestens einen Detektor (9), der das Vorhandensein eines Fremdkörpers unter dem Wagenboden des Fahrzeugs erfassen kann, und eine elektronische Steuereinheit (7) enthält, die konfiguriert ist, wenn ein Fremdelement unter dem Fahrzeug vom Anwesenheitsdetektor (9) erfasst wird, und wenn der eingelegte Gang des Fahrzeugs der Rückwärtsgang ist, ein Bremsmoment anzuwenden, um das Fahrzeug zum Stillstand zu bringen, **dadurch gekennzeichnet, dass** der Detektor konfiguriert ist, einen Erfassungsstrahl (20) zur Rückseite des Fahrzeugs zu emittieren, um, wenn das Fahrzeug zurücksetzt, einen Streifen einer Breite abzutasten, die sich rechts und links von einem vor einem Aufprall zu schützenden Organ erstreckt, wobei die elektronische Steuereinheit ebenfalls konfiguriert ist, ein Haltemoment (Cmaintien) anzuwenden, um das Fahrzeug (1) unbeweglich zu halten.

2. Fahrzeug nach Anspruch 1, mit Elektroantrieb oder mit Hybridantrieb, wobei das zu schützende Organ ein Elektromotor ist, der sich in der Nähe eines Rads des Fahrzeugs befindet, wobei die elektronische Steuereinheit konfiguriert ist, einen oder mehrere Elektromotoren (3) zu steuern, um das Bremsmoment und dann das Haltemoment (Cmaintien) des Fahrzeugs anzuwenden, und um den Verbrennungsmotor (2) des Fahrzeugs, wenn einer vorhanden ist, bei der Erfassung eines Fremdkörpers unter dem Wagenboden des Fahrzeugs auszukuppeln.

3. Fahrzeug nach einem der Ansprüche 1 oder 2, das außerdem mindestens einen Abstandssensor (8) an der Rückseite des Fahrzeugs enthält, wobei die elektronische Steuereinheit (7) konfiguriert ist, um, wenn der vom Abstandssensor (8) gemessene Abstand (d) geringer wird als eine Abstandsschwelle (d₁), und wenn das Fahrzeug im Rückwärtsgang ist, an einen von einem Gaspedal (5) emittierten Momentsollwert einen Multiplikationskoeffizienten (K) geringer als 1 anzuwenden.

4. Fahrzeug nach Anspruch 3, wobei, für die Abstände (d) niedriger als die Schwelle (d₁), der Multiplikationskoeffizient (K) bezüglich des Absolutwerts der Rücksetzgeschwindigkeit (|V|) des Fahrzeugs (1) abnimmt und bezüglich des vom Abstandssensor (8) gemessenen Abstands (d) zunimmt.

5. Fahrzeug nach einem der vorhergehenden Ansprüche mit Hybridantrieb, wobei die elektronische Steuereinheit (7) konfiguriert ist, um, wenn der vom Abstandssensor (8) gemessene Abstand (d) geringer als die Abstandschwelle (d₁) wird, den gleichen Multiplikationskoeffizienten (K) an das erforderliche Drehmoment (Ctherm) eines Verbrennungsmotors (2) und an das erforderliche Drehmoment (Célec) eines oder mehrerer Elektromotoren (3) des Fahrzeugs anzuwenden.

6. Fahrzeug nach einem der vorhergehenden Ansprüche, wobei die elektronische Steuereinheit (7) außerdem konfiguriert ist, ein Moment des Haltens an Ort und Stelle (Cmaintien) des Fahrzeugs (1) anzuwenden, wenn ein Vorwärtsgang oder ein Rückwärtsgang im Fahrzeug eingelegt ist, und wenn eine der folgenden Bedingungen erfüllt ist: entweder wird kein Druck auf das Pedal ausgeübt, oder für den ausgeübten Druckpegel tendiert die tatsächliche Bewegungsrichtung des Fahrzeugs dahin, in Gegenrichtung zum eingelegten Gang zu sein.

7. Fahrzeug nach einem der vorhergehenden Ansprüche, wobei die elektronische Steuereinheit (7) konfiguriert ist zu überprüfen, ob der oder die Elektromotoren (3) in der Lage sind, ein ausreichendes Moment (Cmaintien) anzuwenden, um das Fahrzeug zu bremsen und dann unbeweglich zu halten, und wenn dies nicht der Fall ist, bei der Erfassung eines Fremdkörpers unter dem Wagenboden des Fahrzeugs ein anderes Bremssystem des Fahrzeugs zu betätigen.

8. Verfahren zur Aufprallverhütung eines Unterbodenorgans eines Kraftfahrzeugs, wobei mittels eines von einem Detektor (9) zur Rückseite des Fahrzeugs emittierten Erfassungsstrahls (20) überprüft wird, dass sich kein Fremdkörper innerhalb eines vordefinierten Raums unter dem Wagenboden des Fahrzeugs befindet, um, wenn das Fahrzeug zurücksetzt, einen Streifen einer Breite abzutasten, die sich rechts und links von einem vor einem Aufprall zu schützenden Organ erstreckt, und, wenn ein Fremdkörper in diesem Raum vorhanden ist, ein Bremsmoment angewendet wird, um das Fahrzeug zum Stillstand zu bringen.

9. Verfahren nach Anspruch 8, wobei überprüft wird (13), ob die Rückseite des Fahrzeugs sich nicht in einem Abstand (d) geringer als eine Abstandschwelle (d₁) von einem rückseitigen Hindernis befindet, und unterhalb der Abstandschwelle, wenn der im Fahrzeug eingelegte Gang ein Rückwärtsgang ist (23), ein Multiplikationskoeffizient (K) niedriger als 1 an einen Drehmomentsollwert (Cₜₒₜ) angewendet wird (17), der von einem Gaspedal (5) des Fahrzeugs emittiert wird.

10. Verfahren nach Anspruch 9, wobei der Multiplikationskoeffizient (K) bezüglich des Absolutwerts der Geschwindigkeit abnimmt und bezüglich des Abstands für die Abstände niedriger als die Schwelle zunimmt.

## Claims

1. Vehicle (1) equipped with a device for preventing impacts against an underbody member, comprising at least one detector (9) that is able to detect the presence of a foreign object under the body of the vehicle, and an electronic control unit (7) configured, when a foreign element is detected under the vehicle by the presence detector (9) and the gear engaged on the vehicle is reverse, to apply a brake torque to immobilize the vehicle, **characterized in that** the detector is configured to emit a detection beam (20) towards the rear of the vehicle so as to sweep, when the vehicle reverses, a strip with a width extending to the right and left of a member to be protected from impacts, the electronic control unit also being configured to apply a holding torque (Cmaintien) in order to keep the vehicle (1) immobile.

2. Vehicle according to Claim 1, which has an electric motor or a hybrid engine, wherein the member to be protected is an electric motor situated close to a wheel of the vehicle, the electronic control unit is configured to control one or more electric motors (3) to apply the brake torque and then the holding torque (Cmaintien) of the vehicle, and to disengage the combustion engine (2), if there is one, of the vehicle during the detection of a foreign object under the body of the vehicle.

3. Vehicle according to either of Claims 1 and 2, also comprising at least one distance sensor (8) at the rear of the vehicle, wherein the electronic control unit (7) is configured, when the distance (d) measured by the distance sensor (8) becomes less than a distance threshold (d₁) and the vehicle is reversing, to apply a torque setpoint emitted by an accelerator pedal (5), a multiplying factor (K) less than 1.

4. Vehicle according to Claim 3, wherein, for distances (d) less than the threshold (d₁), the multiplying factor (K) decreases with respect to the absolute value of the reversing speed (|V|) of the vehicle (1) and increases with respect to the distance (d) measured by the distance sensor (8).

5. Vehicle according to any one of the preceding claims, which has a hybrid engine, wherein the electronic control unit (7) is configured, when the distance (d) measured by the distance sensor (8) becomes less than the distance threshold (d₁), to apply the same multiplying factor (K) to the torque (Ctherm) required by a combustion engine (2) and to the torque (Célec) required by one or more electric motors (3) of the vehicle.

6. Vehicle according to any one of the preceding claims, wherein the electronic control unit (7) is also configured to apply a position holding torque (Cmaintien) to the vehicle (1) if a forward gear or reverse gear is engaged on the vehicle, and if one of the following conditions is met: either no pressure is exerted on the pedal, or, for the amount of pressure exerted, the effective direction of movement of the vehicle tends to be in the opposite direction to the gear engaged.

7. Vehicle according to any one of the preceding claims, wherein the electronic control unit (7) is configured to check if the electric motor(s) (3) is/are capable of applying a sufficient torque (Cmaintien) to brake the vehicle and then keep it immobile, and, if this is not the case, to actuate a different brake system of the vehicle during the detection of a foreign object under the body of the vehicle.

8. Method for preventing impacts against an underbody member of a motor vehicle, wherein the absence of a foreign object inside a predefined space under the body of the vehicle is checked via a detection beam (20) emitted by a detector (9) towards the rear of the vehicle so as to sweep, when the vehicle reverses, a strip with a width extending to the right and left of a member to be protected from impacts and, if a foreign object is present in this space, a brake torque for immobilizing the vehicle is applied.

9. Method according to Claim 8, wherein a check (13) is carried out as to whether the rear of the vehicle is not located at a distance (d) less than a distance threshold (d₁) from a rear obstacle, and within the distance threshold, if the gear engaged on the vehicle is reverse (23), a multiplying factor (K) less than 1 is applied (17) to a torque setpoint (Cₜₒₜ) emitted by an accelerator pedal (5) of the vehicle.

10. Method according to Claim 9, wherein the multiplying factor (K) decreases with respect to the absolute value of the speed and increases with respect to the distance, for distances less than the threshold.
